# FASCICULE DE BREVET EUROPEEN

(11) **EP 4 335 697 B1**
(45) Date de publication et mention de la délivrance du brevet: **18.11.2026**
(21) Numéro de dépôt: 23187749.9
(22) Date de dépôt: 26.07.2023
(51) Int. Cl.: B60Q 1/04

(54) **AGENCEMENT POUR PROTECTION D'UN ÉQUIPEMENT D'UN VÉHICULE AUTOMOBILE**
ANORDNUNG ZUM SCHUTZ EINER AUSRÜSTUNG EINES KRAFTFAHRZEUGS
ARRANGEMENT FOR PROTECTING EQUIPMENT OF A MOTOR VEHICLE

(30) Priorité: 07.09.2022 FR 2208958
(43) Date de publication de la demande: 13.03.2024
(73) Titulaire: Renault s.a.s, 92100 Boulogne Billancourt (FR)
(72) Inventeur: GHIRARDINI, Armand, 78280 Guyancourt (FR); MURAT, Julien, 78280 Guyancourt (FR)

(56) Documents cités:
- DE-A1- 102016 011 364
- FR-A1- 2 895 954
- FR-A1- 2 982 550
- FR-A1- 3 061 882

## Description

L'invention concerne un agencement pour protection d'un équipement d'un véhicule automobile. L'invention porte aussi sur un véhicule équipé d'un tel agencement.

Les véhicules automobiles comprennent des moyens d'absorption des chocs destinés à protéger non seulement les usagers du véhicule lors d'un accident de circulation, mais aussi les équipements dont le remplacement ou la réparation est la plus couteuse.

Les moyens d'absorption existants, notamment dans la zone avant du véhicule, occupent un volume non négligeable. Or les constructeurs automobiles développent actuellement des véhicules présentant un porte-à-faux réduit par rapport aux porte-à-faux des véhicules antérieurs, comme c'est le cas notamment pour des véhicules électriques. La réduction du porte-à-faux peut être de l'ordre d'une dizaine de centimètres. Dans ce contexte, les moyens d'absorption existants ne sont pas adaptés aux dimensions réduites du porte-à-faux.

Un agencement pour protection d'un équipement comportant un déflecteur est connu de FR 2 982 550 A1.

Le but de l'invention est de fournir un dispositif pour protection d'un équipement remédiant aux inconvénients ci-dessus et améliorant les dispositifs pour protection d'un équipement connus de l'art antérieur. En particulier, l'invention permet de réaliser un agencement pour protection d'un équipement qui soit simple et fiable et qui offre une protection efficace et présente un encombrement réduit.

A cet effet l'invention porte sur un agencement pour protection d'un équipement d'un véhicule automobile, comprenant les caractéristiques de la revendication 1.

Dans un mode de réalisation, le déflecteur est réalisé en une pièce de tôle emboutie.

Dans un mode de réalisation, l'épaisseur de la tôle du déflecteur est supérieure ou égale à 1,5 millimètres, voire supérieure ou égale à 2 millimètres.

Dans un mode de réalisation, l'agencement comprend un support de fixation de l'équipement, et au moins un moyen de fixation du déflecteur au support de fixation de l'équipement. De plus, la résistance de l'au moins un moyen de fixation du déflecteur est supérieure à la résistance de la patte de fixation du dispositif lumineux.

Dans un mode de réalisation, le déflecteur comprend une découpe fournissant un accès à un connecteur du dispositif lumineux.

Dans un mode de réalisation, le plan donné présente un deuxième angle mesuré dans un plan perpendiculaire à la deuxième direction par rapport à la première direction, le deuxième angle étant supérieur à 20 degrés ou à 30 degrés ou à 40 degrés ou à 45 degrés.

Dans un mode de réalisation, la première distance est inférieure ou égale à dix millimètres et/ou la deuxième distance est supérieure à cent millimètres.

L'invention porte également sur un véhicule automobile comprenant un agencement selon l'invention.

Dans un mode de réalisation d'un véhicule automobile selon l'invention, une distance mesurée entre une pédale d'un conducteur et une extrémité avant du véhicule automobile est inférieure à 0,8 mètre, voire inférieure à 0,75 mètre.

Les dessins annexés représentent, à titre d'exemple, un mode de réalisation d'un agencement selon l'invention.
La figure 1 représente schématiquement un véhicule automobile équipé d'un agencement selon l'invention.
La figure 2 définit un repère orthonormé du véhicule automobile.
La figure 3 est une vue en perspective d'un mode de réalisation d'un agencement selon l'invention.
La figure 4 représente un mode de réalisation d'un moyen de fixation d'un équipement d'un agencement selon l'invention.
La figure 5 représente un mode de réalisation d'un moyen de fixation d'un déflecteur d'un agencement selon l'invention.
La figure 6 est une vue de dessus d'un mode de réalisation d'un agencement selon l'invention
La figure 7 est une vue en perspective d'un mode de réalisation d'un déflecteur d'un agencement selon l'invention.
La figure 8 est une vue de face d'un mode de réalisation d'un déflecteur d'un agencement selon l'invention.
La figure 9 est une vue de profil d'un mode de réalisation d'un déflecteur d'un agencement selon l'invention.
La figure 10 représente une situation initiale d'une simulation d'un choc appliqué à un agencement sans mise en œuvre de l'invention, comprenant un équipement et un dispositif lumineux.
La figure 11 représente une situation finale d'une simulation d'un choc appliqué à un agencement sans mise en œuvre de l'invention, comprenant un équipement et un dispositif lumineux.
La figure 12 représente une situation initiale d'une simulation d'un choc appliqué à un agencement avec mise en œuvre de l'invention, comprenant un équipement, un déflecteur et un dispositif lumineux.
La figure 13 représente une situation finale d'une simulation d'un choc appliqué à un agencement avec mise en œuvre de l'invention, comprenant un équipement, un déflecteur et un dispositif lumineux.

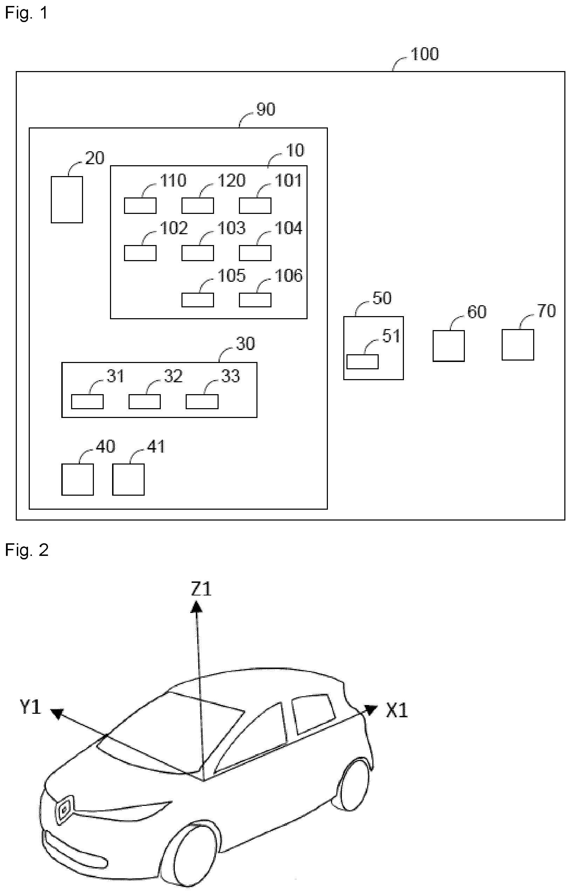

Un mode de réalisation d'un véhicule automobile 100 est décrit ci-après en référence à la figure 1. Le véhicule automobile 100 est un véhicule automobile de n'importe quel type, notamment un véhicule de tourisme ou un véhicule utilitaire. Le véhicule automobile 100 peut être un véhicule thermique, ou électrique ou hybride.

Dans la suite du document, on utilise un premier repère orthonormé direct (X1, Y1, Z1) représenté par la figure 2, l'axe X1 étant parallèle à l'axe longitudinal du véhicule automobile 100 et orienté vers l'arrière du véhicule automobile 100, et l'axe Z1 étant vertical et orienté vers le haut du véhicule.

Dans un mode de réalisation, le véhicule automobile 100 présente un porte-à-faux réduit, c'est-à-dire une distance réduite entre une pédale enfoncée du conducteur et l'extrémité avant du véhicule. Par exemple, dans le mode de réalisation décrit, le porte-à-faux du véhicule est inférieur à 0,8 mètre, voire inférieur à 0,75 mètre.

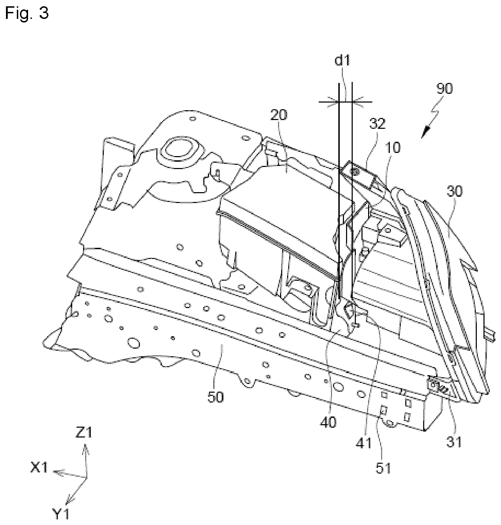

Le véhicule automobile comprend un agencement 90 comprenant un dispositif lumineux 30, un équipement 20 et un déflecteur 10, le déflecteur 10 étant disposé entre le dispositif lumineux 30 et l'équipement 20. L'agencement 90 est décrit en références aux figures 3 à 6.

L'équipement 20, le déflecteur 10 et le dispositif lumineux 30 sont sensiblement alignés selon l'axe longitudinal X1 du véhicule automobile 100.

Dans un mode de réalisation, l'équipement 20 est un boîtier d'interconnexion moteur également nommé selon l'acronyme BIM dans la suite du document. Dans des modes de réalisation alternatifs, l'équipement 20 pourrait être tout autre type d'équipement. L'équipement 20 est préférentiellement un équipement dont la dégradation peut entrainer d'importants frais de réparation.

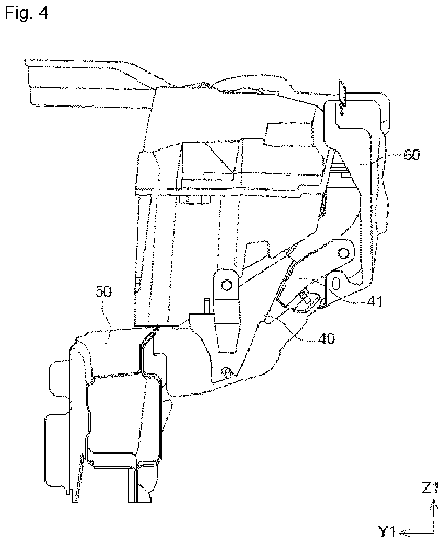

L'agencement 90 peut comprendre en outre un support de fixation 40 de l'équipement 20, aussi nommé support de BIM. Le support de fixation 40 est plus spécifiquement visible sur la figure 4. Le support de fixation 40 est fixé à un longeron 50 du véhicule automobile et à un élément de caisse latéral 60.

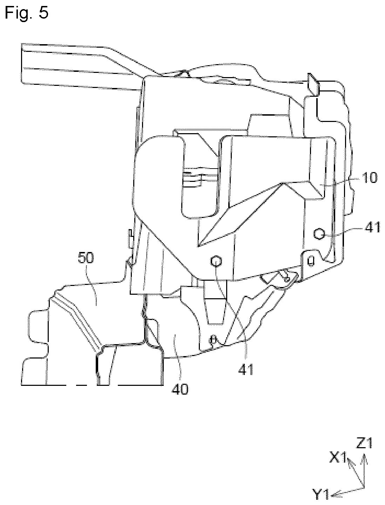

De plus, l'agencement 90 peut comprendre au moins un moyen de fixation 41 du déflecteur 10 au support de fixation 40. Un mode de réalisation du moyen de fixation 41 est représenté sans le déflecteur 10 sur la figure 4, et avec le déflecteur 10 sur la figure 5. Dans le mode de réalisation représenté, l'agencement 90 comprend deux moyens de fixation 41.

Le dispositif lumineux 30 est fixé par une première patte 31, visible sur la figure 3, à un longeron 50 du véhicule. Le longeron 50 présente des ouvertures 51 dont le rôle est d'absorber un choc, notamment un choc selon une direction longitudinale X1 du véhicule automobile 100. Les ouvertures 51 permettent d'affaiblir le longeron 50 dans la direction longitudinale X1, de sorte que le longeron 50 s'écrase en absorbant le choc. L'écrasement du longeron 50 entraine un recul longitudinal du dispositif lumineux 30, qui est fixé au longeron 50 par la patte 31. En d'autres termes, lors d'un choc, notamment frontal, le dispositif lumineux 30 est entrainé par l'intermédiaire de la patte 31 et du longeron 50 dans un mouvement de translation selon la direction longitudinale X1, et se déplace alors vers le déflecteur 10 et l'équipement 20.

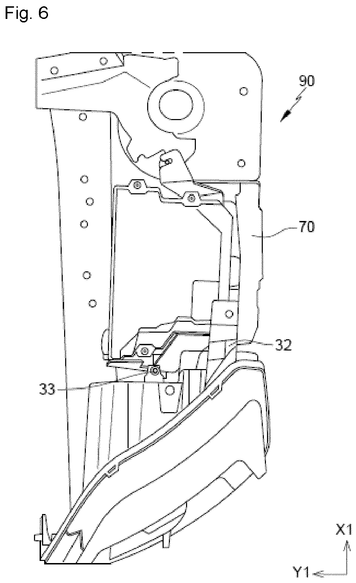

Le dispositif lumineux 30 comprend de plus une deuxième patte de fixation 32 à une structure de fixation 70 du véhicule automobile 100. La patte de fixation 32, visible notamment sur la figure 6, est conçue pour se casser lors d'un recul longitudinal du dispositif lumineux, c'est-à-dire lors d'un déplacement du dispositif lumineux selon l'axe longitudinal X1. Un choc entrainant un recul longitudinal du dispositif lumineux 30 entrainera de ce fait la rupture de la patte 32. Ainsi, après rupture de la patte 32, la trajectoire du dispositif lumineux sera guidée uniquement par le déflecteur 10 et la force de poussée induite par le choc.

Avantageusement, la résistance à la rupture de la deuxième patte de fixation 32 du dispositif lumineux 30 est inférieure la résistance de l'au moins un moyen de fixation 41 du déflecteur 10 sur le support 40. En d'autres termes, la résistance des moyens de fixation respectifs du déflecteur 10 et du dispositif lumineux 30 est calibrée pour que la fixation du déflecteur 10 sur le support 40 résiste à un choc, le choc étant apte à entrainer la rupture de la patte de fixation 32.

Dans un mode de réalisation, le déflecteur 10 est réalisé en une pièce de tôle emboutie. L'épaisseur 107 de la tôle du déflecteur 10 peut être supérieure ou égale à 1,5 millimètres ou supérieure ou égale à 2 millimètres. D'autres épaisseurs sont envisageables.

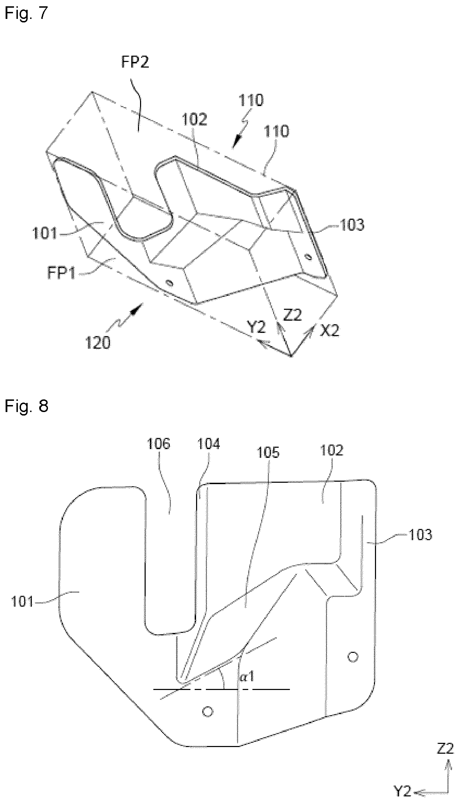

La forme géométrique du déflecteur 10 est plus spécifiquement décrite par les figures 7 à 9.

Le déflecteur 10 est une pièce d'épaisseur constante qui a été modelée pour s'interposer entre l'équipement 20 et le dispositif lumineux 30. Ainsi, une première face principale 110 du déflecteur est destinée à faire face à l'équipement 20, tandis qu'une deuxième face principale 120 du déflecteur est destinée à faire face au dispositif lumineux 30.

Le déflecteur 10 s'inscrit dans un parallélépipède rectangle 110 présentant deux faces principales FP1, FP2. Un deuxième repère orthonormé direct (X2, Y2, Z2) est défini selon trois côtés adjacents du parallélépipède 110.

Selon l'invention, le déflecteur 10 est disposé de sorte que les axes X1, X2 respectifs des premiers et deuxième repères orthonormés directs sont sensiblement parallèles et orientés dans le même sens.

En complément, les axes verticaux Z1, Z2 respectif des premiers et deuxièmes repères orthonormés directs sont sensiblement parallèles et orientés dans le même sens.

Le déflecteur 10 comprend trois surfaces sensiblement planes 101, 102, 103, situées dans des plans différents. Les surfaces 101, 102 et 103 sont sensiblement parallèles entre elles et parallèles à un plan (Y2, Z2). La surface 101 est sensiblement confondue avec la première face principale FP1 du parallélépipède 110, et la surface 103 est sensiblement confondue avec la deuxième face principale FP2 du parallélépipède 110.

Une quatrième surface sensiblement plane 104 est sensiblement parallèle à un plan (X2, Z2). La surface 104 relie la surface 101 à la surface 102. Les surfaces 101, 102, 103, et 104 sont agencées de sorte à suivre le contour de l'équipement 20.

Le déflecteur 10, notamment les surfaces 101 et 104, comprennent avantageusement une découpe 106 fournissant un accès à une zone de réglage ou un connecteur 33 du dispositif lumineux 30.

Le déflecteur 10 comprend en outre un plan donné 105 présentant :
- un premier angle α1 mesuré dans un plan perpendiculaire à une première direction X2, soit l'axe axe X2, par rapport à une deuxième direction Y2, soit l'axe Y2, perpendiculairement à la première direction X2, le premier angle α1 étant supérieur à 20 degrés ou à 30 degrés ou à 40 degrés ou à 45 degrés, et optionnellement
- un deuxième angle α2 mesuré dans un plan perpendiculaire à la deuxième direction Y2, par rapport à la première direction X2, le deuxième angle α2 étant supérieur à 20 degrés ou à 30 degrés ou à 40 degrés ou à 45 degrés.

En d'autres termes, le déflecteur 10 comprend une cinquième surface 105, sensiblement plane, qui coupe le plan (X2, Z2) selon un premier angle α1 par rapport à l'axe Y2, l'angle α1 étant plus spécifiquement visible sur la figure 8.

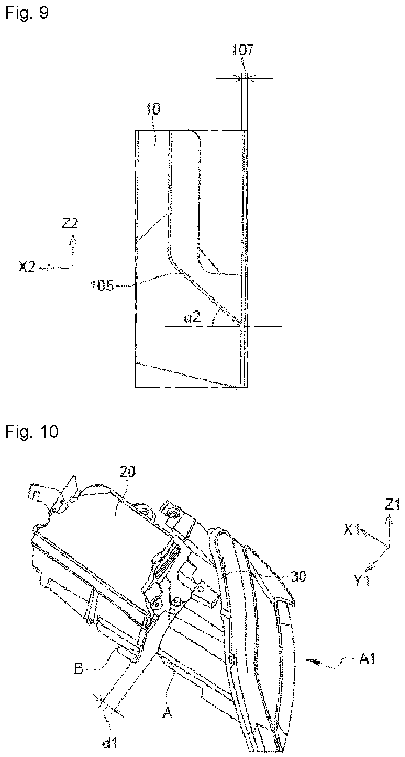

De plus, la cinquième surface 105 coupe le plan (Y2, Z2) selon un deuxième angle α2 par rapport à l'axe X2, l'angle α2 étant plus spécifiquement visible sur la figure 9.

La surface 105 est apte à dévier, notamment verticalement, une trajectoire du dispositif lumineux 30 au-dessus de l'équipement 20 lors d'un choc entrainant un déplacement du dispositif lumineux vers l'arrière du véhicule. Notamment, les angles α1 et α2 sont avantageusement définis de sorte à dévier la trajectoire du dispositif lumineux pour induire une composante verticale de la trajectoire qui sortira le dispositif lumineux 20 du chemin critique du choc. Le chemin critique d'un choc est un empilage d'un ensemble d'éléments du véhicule qui se trouvent sur la trajectoire du choc. Après que l'ensemble des éléments du chemin critique ont été compressés suite à un choc, des intrusions de ces éléments dans le tablier du véhicule peuvent avoir lieu, créant alors un risque pour le conducteur. L'objectif est donc de limiter le nombre et/ou le volume d'éléments se trouvant dans le chemin critique du choc.

Le dispositif lumineux 30 et l'équipement 20 sont séparés l'un de l'autre par une première distance d1 mesurée selon l'axe longitudinal X1 du véhicule automobile 100. Dans un mode de réalisation, la distance d1 est d'environ 10 millimètres. Plus généralement, dans le mode de réalisation de l'invention, notamment dans le mode de réalisation du véhicule automobile 100 porteur de l'invention, la distance d1 est faible, le véhicule automobile 100 ayant un porte-à-faux réduit.

Lors d'un choc du véhicule automobile 100, notamment lors d'un choc frontal, le dispositif lumineux 30 se déplace d'une distance longitudinale d2 en direction de l'équipement 20. La distance longitudinale d2 est une distance projetée sur l'axe longitudinal X2. La distance d2 dépend en particulier de la force et de la durée du choc subi par le véhicule, c'est-à-dire le temps mis pour stopper le véhicule automobile 100.

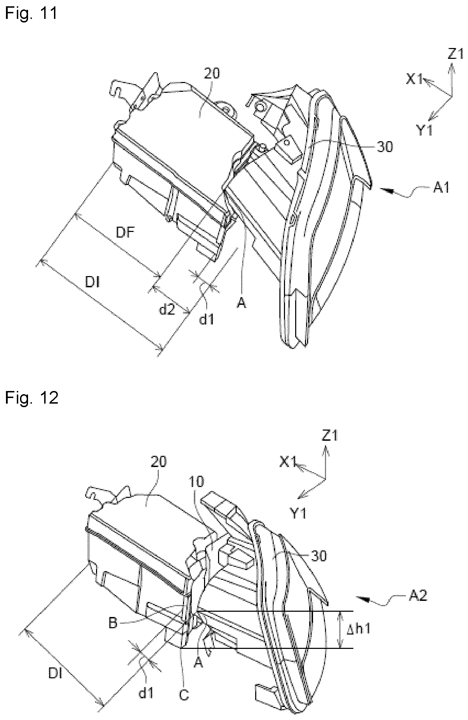

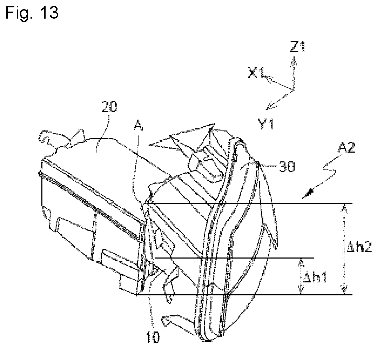

Dans un premier jeu de simulation représenté par les figures 10 à 13, on simule un choc dont l'impact a lieu à une vitesse de 16 km/h. On analyse l'effet du choc sur l'équipement 20, notamment on compare les effets du choc pour un véhicule automobile non équipé d'un déflecteur 10 selon l'invention (voir figures 10 et 11), aux effets d'un choc lorsque le véhicule automobile 100 est équipé d'un déflecteur 10 (voir figures 12 et 13).

Les figures 10 et 11 représentent un premier agencement A1 comprenant un équipement 20 et un dispositif lumineux 30. La figure 10 représente l'agencement A1 avant le choc, et la figure 11 représente l'agencement A1 après le choc. L'équipement 20 et le dispositif lumineux 30 sont séparés l'un de l'autre par un espace libre. Une distance longitudinale d1 est mesurée selon la direction X1 ou X2 entre un point A du dispositif lumineux et un point B de l'équipement. La distance d1 est relativement réduite, elle est de l'ordre d'une dizaine de millimètres. Le point A correspond au point d'impact du dispositif lumineux 30 sur l'équipement 20, en l'absence de déflecteur, comme cela est visible sur la figure 11. Le point B correspond au point de l'équipement 20 qui est le plus proche du dispositif lumineux 30.

Après le choc, on observe un déplacement du dispositif lumineux selon l'axe longitudinal X1 ou X2, d'une distance longitudinale d2. La distance d2 est nettement supérieure à l'espace initialement libre entre l'équipement 20 et le dispositif lumineux 30. En particulier, la distance d2 est supérieur au double de la distance d1. Le point A du dispositif lumineux 30 est entré en contact avec l'équipement 20, au risque de le dégrader.

Les figures 12 et 13 représentent un deuxième agencement A2 comprenant un équipement 20, un dispositif lumineux 30 et un déflecteur 10 interposé entre l'équipement 20 et le dispositif lumineux 30. La figure 12 représente l'agencement A2 avant le choc, et la figure 13 représente l'agencement A2 après le choc.

Après le choc, on observe un déplacement du dispositif lumineux selon l'axe longitudinal X1 ou X2, mais aussi selon l'axe vertical Z1. En effet, la surface 105 du déflecteur modifie la trajectoire du dispositif lumineux en y introduisant une composante verticale. Avant le choc, on mesurait une hauteur Δh1 entre un point C, qui est le point le plus bas de l'équipement 20 relativement à l'axe Z1, et le point d'impact A. Après le choc, on mesure hauteur Δh2 supérieure à la hauteur Δh1, entre le point C et le point d'impact A. Le déplacement vertical du point d'impact permet de déplacer le point d'impact A vers une zone de renfoncement de l'équipement 20, la force du contact entre l'équipement 20 et le dispositif lumineux 30 étant alors réduite, voire annulée. Avantageusement le contact entre l'équipement 20 et le dispositif lumineux 30 peut être évité lors d'un choc selon le premier jeu de simulations.

En outre, lors d'un choc impactant l'agencement A1 sans déflecteur, le projecteur 30 vient en butée sur un boitier en plastique de l'équipement 20, alors que, lors d'un choc impactant l'agencement A2 avec déflecteur, le projecteur 30 vient glisser, puis bloquer sur l'acier composant le déflecteur 10.

Un deuxième jeu de simulation a été mené pour observer les effets sur l'équipement 20 d'un impact ayant lieu à une vitesse de 30 km/h. Les simulations montrent que le déflecteur 10 limite la surface des zones endommagées. Lors d'un choc durant 40 millisecondes, l'agencement A1 (ne comportant pas de déflecteur) commence à présenter quelques zones de déformation importante, notamment certaines zones de déformation présentent un taux de déformation supérieur à 2%. Lorsqu'on applique la même simulation à l'agencement A2 (comportant un déflecteur 10 selon l'invention), les zones de déformations de l'agencement A2 sont plus réduites que les zones de déformations de l'agencement A1. Notamment, le taux de déformation maximal est de 1,2%, ce qui est donc nettement moins important que le taux de déformation observé sur l'agencement A1 sans déflecteur. Des simulations de chocs durant respectivement 45 millisecondes, puis 50 millisecondes montrent que l'agencement A1 (sans déflecteur selon l'invention) se dégrade nettement plus rapidement que l'agencement A2 (avec déflecteur selon l'invention). En particulier, si l'on s'intéresse à la surface d'équipement présentant un taux de déformation supérieur à 2%, les zones concernées dans l'agencement A1 (sans déflecteur) représentent une surface deux à trois fois supérieure à la surface des zones concernées dans l'agencement A2 (avec déflecteur selon l'invention).

Finalement, dans un contexte de réduction du porte-à-faux du véhicule automobile 100, l'agencement selon l'invention permet, lors de choc frontaux du véhicule, de protéger l'équipement compris dans l'agencement.

L'agencement selon l'invention met en œuvre différents moyens pour contrôler la trajectoire du dispositif lumineux lors d'un choc et ainsi faire en sorte que le dispositif lumineux ne détériore pas l'équipement. En premier lieu, le déflecteur est réalisé dans un matériau plus résistant aux chocs que le plastique utilisé pour fabriquer le dispositif lumineux et l'équipement. De plus, le déflecteur comprend une surface de guidage destinée à guider le dispositif lumineux en dehors du chemin critique du choc, notamment la surface de guidage induit une composante verticale dans la trajectoire du dispositif lumineux. De plus, afin de ne pas entraver la trajectoire définie pour le dispositif lumineux par le déflecteur, une patte sécable est conçue pour fixer le dispositif lumineux et se casser lors d'un choc.

## Revendications

1. Agencement (90) pour protection d'un équipement (20) d'un véhicule automobile (100), comprenant un dispositif lumineux (30), un équipement (20) et un déflecteur (10) d'un véhicule automobile (100), **caractérisé en ce que** le dispositif lumineux (30), le déflecteur (10) et l'équipement (20) sont alignés selon une première direction (X2), sensiblement parallèle à un axe longitudinal (X1) du véhicule automobile (100) lorsque l'agencement (90) est installé dans le véhicule automobile (100), le dispositif lumineux (30) et l'équipement (20) étant séparés l'un de l'autre par une première distance (d1) et le déflecteur (10) étant disposé entre le dispositif lumineux (30) et l'équipement (20), et **en ce que** le déflecteur (10) comprend au moins une surface (105) configurée pour dévier une trajectoire du dispositif lumineux au-dessus de l'équipement lors d'un choc entrainant un déplacement du dispositif lumineux (30) d'une deuxième distance (d2) vers l'équipement (20), la deuxième distance (d2) étant projetée sur la première direction (X2) et supérieure à la première distance (d1), l'au moins une surface du déflecteur (10) comprenant un plan donné (105) présentant un premier angle (α1) mesuré dans un plan perpendiculaire à la première direction (X2) par rapport à une deuxième direction (Y2), ladite deuxième direction (Y2) étant perpendiculaire à la première direction (X2) et sensiblement parallèle à un axe transversal (Y1) du véhicule (100) lorsque l'agencement (90) est installé dans le véhicule automobile (100), le premier angle (α1) étant supérieur à 20 degrés ou à 30 degrés ou à 40 degrés ou à 45 degrés..

2. Agencement (90) selon la revendication précédente, **caractérisé en ce que** le déflecteur est réalisé en une pièce de tôle emboutie.

3. Agencement (90) selon la revendication précédente, **caractérisé en ce que** l'épaisseur (107) de la tôle du déflecteur est supérieure ou égale à 1,5 millimètres, voire supérieure ou égale à 2 millimètres.

4. Agencement (90) selon l'une des revendications précédentes, comprenant un support de fixation (40) de l'équipement (20) sur le véhicule, et au moins un moyen de fixation (41) du déflecteur (10) au support de fixation (40) de l'équipement, la résistance de l'au moins un moyen de fixation (41) du déflecteur (10) étant supérieure à la résistance d'une patte de fixation (32) du dispositif lumineux (30) à une structure de fixation (70) du véhicule automobile (100).

5. Agencement (90) selon l'une des revendications précédentes, **caractérisé en ce que** le déflecteur comprend une découpe (106) fournissant un accès à un connecteur (33) du dispositif lumineux (30).

6. Agencement (90) selon la revendication précédente, **caractérisé en ce que** le plan donné (105) présente un deuxième angle (α2) mesuré dans un plan perpendiculaire à la deuxième direction (Y2) par rapport à la première direction (X2), le deuxième angle (α2) étant supérieur à 20 degrés ou à 30 degrés ou à 40 degrés ou à 45 degrés.

7. Agencement (90) selon l'une des revendications précédentes, **caractérisé en ce que** la première distance (d1) est inférieure ou égale à dix millimètres et/ou en ce que la deuxième distance (d2) est supérieure à cent millimètres.

8. Véhicule automobile (100) comprenant un agencement (90) selon l'une des revendications précédentes.

9. Véhicule automobile (100) selon la revendication précédente, **caractérisé en ce qu'**une distance mesurée entre une pédale d'un conducteur et une extrémité avant du véhicule automobile est inférieure à 0,8 mètre, voire inférieure à 0,75 mètre.

## Patentansprüche

1. Anordnung (90) zum Schutz einer Ausrüstung (20) eines Kraftfahrzeugs (100), umfassend eine Leuchtvorrichtung (30), eine Ausrüstung (20) und einen Deflektor (10) eines Kraftfahrzeugs (100),
**dadurch gekennzeichnet, dass** die Leuchtvorrichtung (30), der Deflektor (10) und die Ausrüstung (20) entlang einer ersten Richtung (X2) ausgerichtet sind,
die im Wesentlichen parallel zu
einer Längsachse (X1) des Kraftfahrzeugs (100) ist, wenn die Anordnung (90) in dem Kraftfahrzeug (100) eingebaut ist,
wobei die Leuchtvorrichtung (30) und die Ausrüstung (20) durch einen ersten Abstand (d1) voneinander getrennt sind und wobei der Deflektor (10) zwischen der Leuchtvorrichtung (30) und der Ausrüstung (20) angeordnet ist,
und dass der Deflektor (10) mindestens eine Fläche (105) umfasst, die dazu ausgebildet ist, eine Trajektorie der Leuchtvorrichtung über die Ausrüstung abzulenken bei einem Aufprall, der zu einer Verlagerung der Leuchtvorrichtung (30) um einen zweiten Abstand (d2) zu der Ausrüstung (20) hin führt, wobei der zweite Abstand (d2) auf die erste Richtung (X2) projiziert wird und größer als der erste Abstand (d1) ist,
wobei die mindestens eine Fläche des Deflektors (10) eine gegebene Ebene (105) umfasst, die einen ersten Winkel (α1) aufweist, der in einer Ebene senkrecht zu der ersten Richtung (X2) in Bezug auf eine zweite Richtung (Y2) gemessen wird, wobei die zweite Richtung (Y2) senkrecht zu der ersten Richtung (X2) und im Wesentlichen parallel zu einer Querachse (Y1) des Fahrzeugs (100) verläuft, wenn die Anordnung (90) in dem Kraftfahrzeug (100) eingebaut ist, wobei der erste Winkel (α1) größer als 20 Grad oder 30 Grad oder 40 Grad oder 45 Grad ist.

2. Anordnung (90) nach dem vorhergehenden Anspruch, **dadurch gekennzeichnet, dass** der Deflektor aus einem tiefgezogenen Blechteil ausgeführt ist.

3. Anordnung (90) nach dem vorhergehenden Anspruch, **dadurch gekennzeichnet, dass** die Dicke (107) des Blechs des Deflektors größer oder gleich 1,5 Millimeter oder sogar größer oder gleich 2 Millimeter ist.

4. Anordnung (90) nach einem der vorhergehenden Ansprüche, umfassend eine Befestigungshalterung (40) zum Befestigen der Ausrüstung (20) an dem Fahrzeug und mindestens ein Befestigungsmittel (41) zum Befestigen des Deflektors (10) an der Befestigungshalterung (40) der Ausrüstung, wobei die Festigkeit des mindestens einen Befestigungsmittels (41) des Deflektors (10) größer ist als die Festigkeit einer Befestigungslasche (32) der Leuchtvorrichtung (30) an einer Befestigungsstruktur (70) des Kraftfahrzeugs (100).

5. Anordnung (90) nach einem der vorhergehenden Ansprüche, **dadurch gekennzeichnet, dass** der Deflektor einen Ausschnitt (106) umfasst, der einen Zugang zu einem Verbinder (33) der Leuchtvorrichtung (30) bereitstellt.

6. Anordnung (90) nach dem vorhergehenden Anspruch, **dadurch gekennzeichnet, dass** die gegebene Ebene (105) einen zweiten Winkel (α2) aufweist, der in einer Ebene senkrecht zu der zweiten Richtung (Y2) in Bezug auf die erste Richtung (X2) gemessen wird, wobei der zweite Winkel (α2) größer als 20 Grad oder 30 Grad oder 40 Grad oder 45 Grad ist.

7. Anordnung (90) nach einem der vorhergehenden Ansprüche, **dadurch gekennzeichnet, dass** der erste Abstand (d1) kleiner oder gleich zehn Millimeter ist und/oder dass der zweite Abstand (d2) größer als hundert Millimeter ist.

8. Kraftfahrzeug (100), das eine Anordnung (90) nach einem der vorhergehenden Ansprüche umfasst.

9. Kraftfahrzeug (100) nach dem vorhergehenden Anspruch, **dadurch gekennzeichnet, dass** ein zwischen einem Pedal eines Fahrers und einem vorderen Ende des Kraftfahrzeugs gemessener Abstand kleiner als 0,8 Meter oder sogar kleiner als 0,75 Meter ist.

## Claims

1. Arrangement (90) for protecting an item of equipment (20) of a motor vehicle (100), comprising a lighting device (30), an item of equipment (20) and a deflector (10) of a motor vehicle (100),
**characterized in that** the lighting device (30), the deflector (10) and the item of equipment (20) are aligned along a first direction (X2),
which is substantially parallel to
a longitudinal axis (X1) of the motor vehicle (100) when the arrangement (90) is installed in the motor vehicle (100),
the lighting device (30) and the item of equipment (20) being separated from one another by a first distance (d1) and the deflector (10) being positioned between the lighting device (30) and the item of equipment (20),
and **in that** the deflector (10) comprises at least one surface (105) configured to deflect a trajectory of the lighting device above the item of equipment in the event of an impact causing the lighting device (30) to be displaced by a second distance (d2) towards the item of equipment (20), the second distance (d2) being projected onto the first direction (X2) and greater than the first distance (d1),
the at least one surface of the deflector (10) comprising a given plane (105) forming a first angle (α1) measured in a plane perpendicular to the first direction (X2) with respect to a second direction (Y2), said second direction (Y2) being perpendicular to the first direction (X2) and substantially parallel to a transverse axis (Y1) of the vehicle (100) when the arrangement (90) is installed in the motor vehicle (100), the first angle (α1) being greater than 20 degrees or than 30 degrees or than 40 degrees or than 45 degrees.

2. Arrangement (90) according to the preceding claim, **characterized in that** the deflector is formed as a stamped sheet-metal component.

3. Arrangement (90) according to the preceding claim, **characterized in that** the thickness (107) of the sheet metal of the deflector is greater than or equal to 1.5 millimetres, or even greater than or equal to 2 millimetres.

4. Arrangement (90) according to one of the preceding claims, comprising a fastening support (40) for fastening the item of equipment (20) to the vehicle,
and at least one fastening means (41) for fastening the deflector (10) to the fastening support (40) for the item of equipment, the strength of the at least one fastening means (41) for fastening the deflector (10) being greater than the strength of a fastening tab (32) for fastening the lighting device (30) to a fastening structure (70) of the motor vehicle (100).

5. Arrangement (90) according to one of the preceding claims, **characterized in that** the deflector comprises a cutout (106) providing access to a connector (33) of the lighting device (30).

6. Arrangement (90) according to the preceding claim, **characterized in that** the given plane (105) forms a second angle (α2) measured in a plane perpendicular to the second direction (Y2) with respect to the first direction (X2), the second angle (α2) being greater than 20 degrees or than 30 degrees or than 40 degrees or than 45 degrees.

7. Arrangement (90) according to one of the preceding claims, **characterized in that** the first distance (d1) is less than or equal to ten millimetres and/or in that the second distance (d2) is greater than one hundred millimetres.

8. Motor vehicle (100) comprising an arrangement (90) according to one of the preceding claims.

9. Motor vehicle (100) according to the preceding claim, **characterized in that** a distance measured between a driver's pedal and a front end of the motor vehicle is less than 0.8 metres, or even less than 0.75 metres.
